# EUROPÄISCHE PATENTSCHRIFT

(11) **EP 1 826 082 B1**
(45) Veröffentlichungstag und Bekanntmachung des Hinweises auf die Patenterteilung: **24.10.2012**
(21) Anmeldenummer: 07002585.3
(22) Anmeldetag: 07.02.2007
(51) Int. Cl.: B60T 8/1755, B60T 8/1766, B60T 8/24, B60T 8/171, B60T 8/18, G01G 19/12

(54) **Radschlupfregelsystem und Verfahren zum Regeln von Bewegungen von Rädern eines Fahrzeugs**
Wheel slip control system and method for controlling the movements of a vehicle's wheels
Système de réglage de patinage et procédé destiné au réglage de mouvements de roues d'un véhicule

(30) Priorität: 22.02.2006 DE 102006008214
(43) Veröffentlichungstag der Anmeldung: 29.08.2007
(73) Patentinhaber: AUDI AG, 85045 Ingolstadt (DE)
(72) Erfinder: Reim, Nikolaus, 85276 Pfaffenhofen (DE); Mäusbacher, Bernhard, 85080 Gaimersheim (DE)
(74) Vertreter: Patzelt, Heike Anna Maria

(56) Entgegenhaltungen:
- DE-A1- 19 855 332
- DE-A1- 19 955 094
- DE-A1-102004 040 876
- DE-B4- 4 042 581

## Beschreibung

Die Erfindung betrifft ein Radschlupfregelsystem für ein Fahrzeug mit zumindest zwei angetriebenen Rädern, sowie ein Verfahren zum Regeln von Bewegungen von Rädern eines Fahrzeugs mit zumindest zwei angetriebenen Rädern.

Werden Fahrzeuge entlang einer Kurve bewegt, so bewegen sich die kurveninneren Räder auf einer Bahn mit einem kleineren Kurvenradius als die kurvenäußeren Räder. In derartigen Situationen legen die kurveninneren Räder einen kürzeren Weg zurück als die kurvenäußeren Räder, wodurch die Umfangsgeschwindigkeit und damit die Drehzahl der kurveninneren Räder entsprechend geringer sein muss. Um dies zu gewährleisten, werden die angetriebenen Räder über Differentialgetriebe angetrieben, so dass die Räder einer Achse auch in der Kurve ohne einen Radschlupf gegenüber der Fahrbahn abrollen können. Dabei stützen sich die Vortriebskräfte der Räder einer Achse gegenseitig an der Fahrbahn ab. Rutscht ein Rad durch, entsteht gegenüber der Fahrbahn ein Radschlupf und das Abstützmoment reduziert sich auf ein Moment, das sich aus der Reibleistung des durchdrehenden Rades ergibt. Das Vortriebsmoment des anderen Rades verringert sich entsprechend, so dass die Traktion des Fahrzeugs stark vermindert ist. Darüber hinaus wird durch den Radschlupf die Seitenführung des Rades und damit die Fahrzeugstabilität des Fahrzeugs stark beeinträchtigt.

Um die Traktion verbessern zu können und fahrdynamische Korrekturen durchführen zu können, werden Differentialgetriebe mit elektronisch getriebenen Sperren realisiert. Ferner werden die Bremsen einzelner Räder gezielt angesteuert, um das Traktions- und Stabilitätsverhalten des Fahrzeugs verbessern zu können. Bei diesen Regelsystemen dient der Radschlupf als Regelgröße, d. h. wenn ein Rad so stark schlupft, dass die Differentialsperre oder eine Bremse den Schlupf verringern kann, dann werden diese aktiviert. Dazu ist es jedoch erforderlich, dass zunächst überhaupt ein Radschlupf auftritt und dieser bestimmt werden kann.

Aus der DE 199 54 131 A1 ist ein Verfahren zum Reduzieren eines Radschlupfes eines Fahrzeugs mit mindestens zwei lenkbaren Rädern bekannt. Tritt ein Radschlupf an einem der Räder auf, wird eine zugeordnete Bremse oder eine Differentialsperre geregelt betätigt. Die Betätigung erfolgt dabei in Abhängigkeit einer Kenngröße, welche unter Berücksichtigung von virtuellen Kurvenradien und Sollradien der Räder ermittelt wird.

Darüber hinaus ist aus der DE 34 25 691 A1 eine Vorrichtung zum form- oder kraftschlüssigen Einschalten einer Differentialsperre eines Fahrzeugs, insbesondere land- oder bauwirtschaftlich nutzbaren Fahrzeugen bekannt, welche Schaltmittel zum Erfassen eines Lenkwinkels und/oder einer Fahrgeschwindigkeit sowie einer Zugkraft aufweist, und bei Überschreiten oder Unterschreiten von Grenzwerten dieser Größen die Differentialsperre selbsttätig ein- oder ausgeschaltet wird.

Darüber hinaus ist aus der EP 0 792 782 A2 ein Verfahren zur Sicherstellung eines neutralen Fahrverhaltens bei Kurvenfahrten und gleichzeitigen Lastwechsel eines Fahrzeugs bekannt. Zur Verbesserung des Lastwechselverhaltens bei Kurvenfahrten an der geschleppten Achse wird durch einen geregelten Bremseingriff ein Gegengiermoment erzeugt, das dem durch den Schubbetrieb hervorgerufenen Giermoment entgegenwirkt. Die Bremsbetätigung zur Erzeugung des Gegengiermoments erfolgt jedoch erst ab bestimmten Schleppkräften bzw. Radschlupfwerten. Dazu wird eine festgelegte Größe ermittelt, beispielsweise eine dem Motorschleppmoment oder dem Radschlupf entsprechende Größe, und der Bremseingriff erst dann durchgeführt, wenn diese Größe einen Grenzwert überschreitet. Der Bremseingriff erfolgt somit erst dann, wenn ein aufgetretener Radschlupf einen Grenzwert-Radschlupf übersteigt.

Aus der DE 102 38 221 A1 ist eine Antriebsschlupfregelung mit individueller Absenkung der Schlupfschwelle des kurvenäußeren Antriebsrades bekannt. Bei einer Kurvenfahrt auf einer Fahrbahn mit niedrigem Reibwert wird die Schlupfschwelle für das kurvenäußere Rad unabhängig von derjenigen des kurveninneren Rades abgesenkt und auf einen kleineren Wert eingestellt, als diejenige des kurveninneren Rades. Dadurch soll erreicht werden, dass die Antriebsschlupfregelung bereits bei sehr geringem Radschlupf eingeleitet wird. Aufgrund der höheren Schlupfschwelle des kurveninneren Antriebsrades wird zudem weniger Sperrmoment auf das kurvenäußere Rad übertragen.

Darüber hinaus ist aus der EP 1 319 547 A2 eine elektronische Lenks- und/oder Querdifferentialsperre bekannt. Die Aktivierung dieses Systems erfolgt ebenfalls erst dann, wenn beispielsweise ein Radschlupf an einem der Räder aufgetreten ist.

Des Weiteren ist es in modernen Fahrzeugen bekannt, dass eine elektronische Differentialsperre (EDS) Bestandteil eines Antiblockiersystems (ABS) oder eines Fahrdynamikregelsystems, insbesondere eines ESP (Elektronisches Stabilitätsprogramm) -Systems, ist. Die elektronische Differentialsperre stellt durch das Abbremsen von durchdrehenden Rädern die Funktion einer Differentialsperre da. Die Antriebskraft bzw. das Antriebsmoment an dem schlupflosen Rad einer Antriebsachse erhöht sich um das Bremsmoment des schlupfenden Rades.

Bei den bekannten Verfahren und Systemen treten auf Grund deren Konzeptionierung Traktions- und Komforteinbußen beim Betrieb des Fahrzeugs auf. Insbesondere bei Kurvenfahrten sind diese Einbußen auf das Fahrverhalten des Fahrzeugs unerwünscht.

Daher ist es Aufgabe der vorliegenden Erfindung, ein Radschlupfregelsystem sowie ein Verfahren zum Regeln von Bewegungen von Rädern eines Fahrzeugs zu schaffen, mit dem das Fahrverhalten verbessert werden kann. Insbesondere Traktions- und Komforteinbußen sollen dabei reduziert werden.

Diese Aufgabe wird durch ein Radschlupfregelsystem, welches die Merkmale nach Patentanspruch 1 aufweist, und ein Verfahren, welches die Merkmale nach Patentanspruch 17 aufweist, gelöst.

Ein lösungsgemäßes Radschlupfregelsystem für ein Fahrzeug mit zumindest zwei angetriebenen Rädern umfasst Mittel zum Erfassen der Radlasten der Räder. Das Radschlupfregelsystem ist derart ausgebildet, dass bei unterschiedlichen Radlasten der beiden Räder ein Ist-Wert einer Kenngröße ermittelbar ist, wobei der Ist-Wert mit einem Referenzwert dieser Kenngröße verglichen wird und abhängig von dem Ergebnis dieses Vergleichs ein Bremssystems des Fahrzeugs zur Erzeugung eins Bremsdrucks aktivierbar ist. Ist das Bremssystem auf Grund des Vergleichsergebnisses aktiviert, so ist ein Bremsdruck zum Abbremsen eines Rades abhängig von dem Ist-Wert der Kenngröße erzeugbar, wobei das abzubremsende Rad anhand einer charakteristischen Größe ermittelbar ist. Das Radschlupfregelsystem ist derart ausgebildet, dass der Bremsdruck vor dem Auftreten eines Radschlupfes eines der angetriebenen Räder aufgebaut wird. Dazu umfasst das Radschlupfregelsystem in bevorzugter Weise entsprechende Mittel, insbesondere Sensoren sowie Auswerteeinheiten und/oder Steuer- und/oder Regeleinheiten. Durch das vorgeschlagene Radschlupfregelsystem kann somit das Fahrverhalten eines Fahrzeugs wesentlich verbessert werden, da Traktions- und Komforteinbußen reduziert werden können. Das Radschlupfregelsystem ist derart ausgebildet, dass ein Bremseingriff bereits vor dem Auftreten eines Schlupfs durchgeführt wird und somit ein präventiver Eingriff erfolgt. Vergleiche von Ist-Werten mit zumindest einem Referenz-Wert einer Kenngröße ermöglichen das frühzeitige Erkennen einer Fahrsituation, in der im Nachfolgenden ein Radschlupf auftreten wird bzw. kann, wobei bei dem Erkennen eines gegebenenfalls nachfolgend eintretenden Radschlupfes vorbeugend auf das Fahrverhalten und insbesondere auf die Bewegung der Räder eingegriffen wird. Insbesondere umfasst das Radschlupfregelsystem eine elektronische Differentialsperre, wobei die Erzeugung des Bremsdrucks und die Aktivierung des Bremssystems und somit auch die Aktivierung der elektronischen Differentialsperre vor dem Auftreten von Radschlupf erfolgt. Die Sperrwirkung der elektronischen Differentialsperre erfolgt somit im Vergleich zum Stand der Technik früher und komfortabler, insbesondere im Wesentlichen auch ruckfrei.

Die charakteristische Größe zur Erkennung, welches angetriebene Rad abzubremsen ist, kann durch die Radlast eines Rades gegeben sein. Abhängig von den ermittelten und erfassten Radlasten der angetriebenen Räder wird dann der Bremsdruck bei dem Rad aufgebaut, welches die kleinere Radlast aufweist. Ebenso kann jedoch auch vorgesehen sein, dass die das abzubremsende Rad charakterisierende Größe durch das auf das jeweilige Rad übertragbare Antriebsmoment gegen ist und das Rad mit dem kleineren übertragbaren Antriebsmoment abzubremsen ist.

Besonders bei Kurvenfahrten ergeben sich auf Grund der Fahrzeugphysik Bedingungen, bei denen auf das kurvenäußere Rad größere Radlasten als auf das kurveninnere Rad wirken. Insbesondere mit steigender Querbeschleunigung nehmen diese Radlasten auf das kurvenäußere Rad zu, wohingegen die Radlasten auf das kurveninnere Rad mit steigender Querbeschleunigung abnehmen. Die Radlasten können mit einer entsprechenden Sensorik erfasst werden.

Allein die Größe der Radlast reicht somit bei dem vorgeschlagenen Radschlupfregelsystem als grundlegende Größe aus, um Entscheidungen darüber treffen zu können, welches Rad bei einem gegebenenfalls durchzuführenden Abbremsvorgang abzubremsen ist.

Es kann jedoch auch vorgesehen sein, dass das übertragbare Antriebmoment dieser Entscheidung zu Grunde gelegt wird, wobei das übertragbare Antriebsmoment in Abhängigkeit der Radlasten und der Fahrbahnreibwerte sowie dem Radhalbmesser ermittelt wird. Bei Zugrundelegung des übertragbaren Antriebsmoments als charakteristische Größe wird insbesondere auch der Fahrbahnreibwert berücksichtigt, wodurch eine präzisere Aussage möglich ist. Es kann dabei vorgesehen sein, dass für beide Räder ein gleicher Fahrbahnreibwert zu Grunde gelegt wird. Es kann jedoch auch vorgesehen sein, dass unterschiedliche Fahrbahnreibwerte für die angetriebenen Räder zu Grunde gelegt werden, wobei diese Fahrbahnreibwerte insbesondere in der gegebenen Momentansituation ermittelt werden können. Es kann dabei vorgesehen sein, dass die örtlichen Fahrbahnreibwerte an den Positionen der jeweiligen angetriebenen Räder durch ein Fahrdynamikregelsystem des Fahrzeugs, insbesondere ein ESP-System ermittelbar sind, und für das Radschlupfregelsystem bereitstellbar sind.

Die Radlasten der Räder sind neben der Querbeschleunigung auch von der Längsbeschleunigung des Fahrzeugs abhängig. Auch diese kann bei der Radlastermittlung zusätzlich neben der Querbeschleunigung berücksichtigt werden.

Es kann vorgesehen sein, dass dieser Fahrbahnreibwert explizit berechnet und ermittelt wird, wenn das Fahrdynamikregelsystem zum momentanen Zeitpunkt aktiv ist und selbstregelnd eingreift. Ist das Fahrdynamikregelsystem inaktiv bzw. führt zum momentanen Zeitpunkt keinen Regelvorgang durch, so kann vorgesehen sein, dass ein plausibler Fahrbahnreibwert bei dem Radschlupfregelsystem zu Grunde gelegt wird. Auch hier kann vorgesehen sein, dass für beide angetriebenen Räder ein gleicher plausibler Fahrbahnreibwert zu Grunde gelegt wird, oder für beide Räder unterschiedliche Fahrbahnreibwerte angenommen werden.

Das Fahrdynamikregelsystem kann auch als Antriebsschlupfregelsystem (ASR) ausgebildet sein.

Besonders bei Kurvenfahrten kann durch das lösungsgemäße Radschlupfregelsystem somit ein wesentlich verbessertes Fahrverhalten erreicht werden, da gerade bei derartigen Bewegungszuständen des Fahrzeugs Radlastunterschiede, insbesondere relativ große Radlastunterschiede, auftreten können. Die Querdynamik der Kurvenfahrt bedingt eine Verminderung der Radaufstandskraft bzw. der Radlast des kurveninneren Rades und eine Erhöhung der Radaufstandskraft bzw. der Radlast des kurvenäußeren Rades. Diese Kräfte bzw. Lasten sind durch ein Fahrdynamikregelsystem des Fahrzeugs ermittelbar und bereitstellbar.

In vorteilhafter Weise ist der Referenz-Wert der Kenngröße durch eine Situation charakterisiert, in der ein Radschlupf eines der Räder auftritt. Der Referenz-Wert der Kenngröße ist somit derart vorgegeben, dass dadurch ein gerade auftretender Radschlupf charakterisiert ist. Insbesondere ist der Referenz-Wert derart vorgegeben, dass er einen gerade auftretenden Radschlupf des Rades mit der kleineren Radlast oder des Rades mit dem kleineren übertragbaren Antriebsmoment charakterisiert. Bei einer Kurvenfahrt des Fahrzeugs ist dies das kurveninnere Rad, welches die kleinere Radlast aufweist. Unter Berücksichtigung des Fahrbahnreibwertes, welcher ebenfalls in die Größe des übertragbaren Antriebsmoments eingeht, kann dies noch präzisiert werden und es können sogar Situationen auftreten, in denen in einer Kurvenfahrt zwar das kurvenäußere Rad eine größere Radlast als das kurveninnere Rad aufweist, dennoch auf Grund unterschiedlicher Fahrbahnreibwerte der Räder auf das kurvenäußere Rad ein kleineres übertragbares Antriebsmoment übertragbar ist. In einer derartigen Situation würde an dem kurvenäußeren Rad eher ein Radschlupf auftreten, als bei einem kurveninneren Rad. Daher würde in einer derartigen Situation dann das kurvenäußere Rad durch Aufbau eines Bremsdrucks abgebremst werden bevor ein Radschlupf an diesem kurvenäußeren Rad auftreten könnte. Das übertragbare Antriebsmoment ist abhängig von der übertragbaren Antriebskraft, welche wiederum von der Radlast bzw. der Gewichtskraft auf ein Rad abhängig ist.

Vorzugsweise ist das Radschlupfregelsystem derart ausgebildet, dass dann, wenn der Ist-Wert der Kenngröße kleiner als der Referenz-Wert der Kenngröße ist, dass Bremssystem zum Aufbau von Bremsdruck vor dem Auftreten von Radschlupf aktivierbar ist. In vorteilhafter Weise ist das Bremssystem zum Aufbau vom Bremsdruck vor dem Auftreten von Radschlupf nur dann aktvierbar, wenn der Ist-Wert zumindest 95 % des Referenz-Wertes, insbesondere 97 % des Referenz-Wertes, insbesondere 99 % des Referenz-Wertes, beträgt. Durch eine derartige Intervallbildung wird praktisch ein unterer und ein oberer Referenz-Wert vorgegeben. Befindet sich der Ist-Wert innerhalb dieses vorgebbaren Intervalls erfolgt eine Aktivierung der elektronischen Differenzialsperre und ein Bremsdruckaufbau kann erfolgen. Dadurch kann erreicht werden, dass nicht grundsätzlich bei jeder Abweichung zwischen dem Ist-Wert und dem Referenz-Wert, bei dem der Ist-Wert kleiner als der Referenz-Wert ist, ein Aktivieren des Bremssystems erfolgt. Durch die anteilsmäßige Vorgabe des Ist-Wertes von dem Referenz-Wert im Hinblick auf ein Aktivieren des Bremssystems kann ein komfortables Fahrverhalten des Fahrzeugs erreicht werden und insbesondere in Fahrsituationen, in denen der Eingriff des Radschlupfregelsystems durch die Aktivierung der Bremse erforderlich ist, gewährleistet werden. Die Fahrdynamik des Fahrzeugs wird somit relativ hoch gehalten und durch einen unnötigen Eingriff des Radschlupfregelsystems durch eine nicht erforderliche Bremssystembetätigung nicht beschränkt.

Vorzugsweise ist das Bremssystem zur Erzeugung eines Bremsdrucks in Abhängigkeit der momentanen Fahrzeuggeschwindigkeit aktivierbar. Es wird somit ein zusätzliches Entscheidungskriterium geschaffen, anhand dem neben der grundlegenden Kenngröße entschieden werden kann, ob ein Aktivieren des Bremssystems auf Grund des Fahrzustands des Fahrzeugs durchzuführen ist. Dadurch kann die Sicherheit beim Betrieb des Fahrzeugs erhöht werden.

Vorzugsweise ist die Aktivierung des Bremssystems und bei einem dann gegebenenfalls aktivierten Bremssystem der Aufbau des Bremsdrucks abhängig von der Temperatur des Bremssystems durchführbar. Auch dadurch kann ein zusätzliches Entscheidungskriterium geschaffen werden, welches neben der grundlegenden Kenngröße und gegebenenfalls der momentanen Fahrzeuggeschwindigkeit herangezogen werden kann, um zu entscheiden, ob das Bremssystem aktiviert werden soll und bei einer gegebenenfalls aktivierten Bremse abhängig von dieser Temperatur des Bremssystems ein Druckaufbau erfolgt. Auch dadurch kann dem Aspekt der Sicherheit Rechnung getragen werden und insbesondere ein Überhitzen der Bremse verhindert werden.

Darüber hinaus kann vorgesehen sein, dass die Aktivierung des Bremssystems und bei einem gegebenenfalls aktivierten Bremssystem der Aufbau des Bremsdrucks abhängig von einem Lenkwinkel zumindest eines Rades durchgeführt wird. Auch dadurch wird eine weitere zusätzliche Entscheidungsgröße bereitgestellt, welche ein sicheres Betreiben des Fahrzeugs und insbesondere des Radschlupfregelsystems ermöglicht. Die Aktivierung des Bremssystems und somit der elektronischen Differentialsperre kann somit in Abhängigkeit von mehreren Entscheidungsgrößen und der grundlegenden Kenngröße durchgeführt werden.

Die grundlegende Kenngröße, von der ein Referenz-Wert bereitgestellt und ein Ist-Wert ermittelt wird, kann durch die Radlastdifferenz zwischen den beiden unterschiedlichen Radlasten der Räder gegen sein. Bei dieser Ausführung kann somit als Referenz-Wert eine Ratlastdifferenz vorgegeben werden, welche das Auftreten eines Radschlupfes charakterisiert. Es kann jedoch auch vorgesehen sein, dass dieser Referenz-Wert und insbesondere diese Referenz-Radlastdifferenz derart vorgegeben wird, dass dadurch eine Schlupfneigung mit einer gewissen Wahrscheinlichkeit definiert ist. So kann vorgesehen sein, dass durch diesen Referenz-Wert und insbesondere diese Referenz-Radlastdifferenz angegeben ist, dass eine Situation vorliegt, bei der zu 85 %, insbesondere zu 90 %, insbesondere zu 95 % und insbesondere zu 99 % ein Radschlupf eines der Räder, und insbesondere des Rades mit der kleineren Radlast, auftritt. Es kann dabei vorgesehen sein, dass der Referenz-Wert derart vorgegeben wird, dass die Radlastdifferenz dem Wert der kleineren Radlast der beiden Räder entspricht. Es kann jedoch auch vorgesehen sein, dass andere Referenz-Werte vorgegeben sind, beispielsweise kann dabei vorgesehen sein, dass dieser Referenz-Wert die Hälfte der kleineren Radlast der Räder entspricht. Diese Ausführungen sind jedoch lediglich beispielhaft und der Referenz-Wert kann in vielerlei Hinsicht vorgegeben werden. Es kann dabei beispielsweise auch berücksichtigt werden, dass mehrere Referenz-Werte vorgegeben sind und in einer entsprechenden Einheit des Radschlupfregelsystems abgelegt und gespeichert sind und abhängig von Umgebungsbedingungen und/oder Fahrbahnbedingungen und/oder Fahrzuständen des Fahrzeugs ein individueller Referenz-Wert der Radlastdifferenz herangezogen wird. Von der Kenngröße der Radlastdifferenz werden somit eine Mehrzahl an Referenz-Werte, welche unterschiedlich sind, bereitgestellt, welche dann situationsabhängig herangezogen werden können, um eine Situation detektieren zu können, in welcher der Aufbau eines Bremsdrucks zum Abbremsen eines Rades vor dem Auftreten eines Radschlupfs durchgeführt wird.

Der Aufbau des Bremsdrucks bzw. der Aufbau des Sperrmoments der elektronischen Differentialsperre kann dadurch situationsabhängig in optimaler Weise erfolgen.

Ist die Kenngröße durch die Radlastdifferenz charakterisiert, so kann vorgesehen sein, dass der Aufbau des Bremsdrucks bei einem aktivierten Bremssystem zusätzlich abhängig von einer Motordrehzahl und einem momentanen Motormoment ist. Es kann dabei vorgesehen sein, dass für jeden Gang des Fahrzeugs, in dem die Funktion gewünscht wird, eine Applikation eines dreidimensionalen Kennfeldes durchgeführt wird. In diesem Kennfeld werden die Antriebskraft und die übertragbare Kraft bzw. das Antriebsmoment und das übertragbare Antriebsmoment im Fahrversuch ermittelt und in Simulationen bewertet, und entsprechende Bremsdrücke bzw. Sperrmomente appliziert.

Vorzugsweise kann vorgesehen sein, dass für ein vorgebbares Intervall von Ist-Werten von Radlastdifferenzen ein konstanter Bremsdruck erzeugbar ist. So kann über einen großen Wertebereich von Radlastdifferenzen ein stufenförmiges Bremsdruckmodel bereitgestellt werden. Die Intervalle können dabei in Anzahl und Größe variieren.

In einer weiteren Ausgestaltung kann bevorzugt vorgesehen sein, dass die grundlegende Kenngröße eine Antriebsmomentdifferenz ist, welche aus einem verfügbaren Antriebsmoment und einem auf ein Rad übertragbares Antriebsmoment gebildet ist. Insbesondere ist das übertragbare Antriebsmoment dasjenige, welches das kleinere der beiden auf die angetriebenen Räder jeweils übertragbaren Antriebsmomente ist. Dieses Rad mit dem kleineren übertragbaren Antriebsmoment ist im Allgemeinen bei einer Kurvenfahrt das kurveninnere Rad. Sind jedoch die Radlasten auf das kurveninnere und das kurvenäußere Rad nicht stark unterschiedlich aber der Fahrbahnreibwert beim kurvenäußeren Rad deutlich geringer als der Fahrbahnreibwert beim kurveninneren Rad, so kann auch das kurvenäußere Rad dasjenige Rad darstellen, auf das nur das kleinere übertragbare Antriebsmoment übertragbar ist.

Vorzugsweise ist das verfügbare Antriebsmoment abhängig von dem Motormoment und eine Übersetzung, insbesondere einer Getriebeübersetzung und einer Achsenübersetzung. Das übertragbare Antriebsmoment ist bevorzugt abhängig von der Radlast des Rades und/oder dem Reifenhalbmesser und/oder von einem Fahrbahnreibwert ermittelbar. Insbesondere zum Bestimmen des übertragbaren Antriebsmoments sind Informationen eines Fahrdynamikregelsystems, insbesondere eines EPS-Systems, berücksichtigbar. Es kann dadurch erreicht werden, dass bei einem Fahrzeug, welches ein Fahrdynamikregelsystem aufweist, ohnehin vorhandene Informationen auch für das Radschlupfregelsystem bereitgestellt und verwendet werden können. Der Aufwand zur Generierung von erforderlichen Informationen kann dadurch reduziert werden.

Wird als Kenngröße eine Antriebsmomentdifferenz zu Grunde gelegt, so kann dadurch bei einer Kurvenfahrt des Fahrzeugs auch ein sogenannter "Torque Vectoring"-Effekt erzielt werden. Bei diesem Effekt werden gezielt seitenweise unterschiedliche Antriebskräfte bzw. Antriebsmomente auf die Räder zur Beeinflussung der Fahrdynamik des Fahrzeugs erzeugt.

Vorzugsweise wird der Bremsdruck bei einem aktivierten Bremssystem derart aufgebaut, dass bzw. bis die Summe aus den momentan auf die beiden Räder übertragbaren Antriebsmomenten im Wesentlichen gleich den momentan theoretisch möglichen Antriebsmomenten entspricht bzw. ist.

Bei einem lösungsgemäßen Verfahren zum Regeln von Bewegungen von Rädern eines Fahrzeugs mit zumindest zwei angetriebenen Rädern werden Radlasten dieser Räder erfasst und miteinander verglichen und bei unterschiedlichen Radlasten der beiden Räder ein Ist-Wert einer Kenngröße ermittelt, welcher mit einem Referenz-Wert der Kenngröße verglichen wird. Abhängig von dem Ergebnis des Vergleichs wird ein Bremssystem des Fahrzeugs zur Erzeugung eines Bremsdrucks aktiviert, wobei bei einem Aktivieren des Bremssystems der Bremsdruck zum Abbremsen eines Rades abhängig von dem Ist-Wert der Kenngröße erzeugt wird, wobei das abzubremsende Rad anhand einer charakteristischen Größe ermittelt wird und der Bremsdruck vor dem Auftreten eines Radschlupfes eines der Räder aufgebaut wird. Durch das Verfahren kann somit erreicht werden, dass keine Traktions- und Komforteinbußen beim Fortbewegen des Fahrzeugs auftreten. Insbesondere in Kurvenfahrten kann dadurch das Fahrverhalten des Fahrzeugs verbessert werden. Der Aufbau von Bremsmomenten bzw. Sperrmomenten durch eine elektronische Differentialsperre kann somit präventiv erfolgen und auch ruckfrei ermöglicht werden.

Die vorsehbare elektronische Differentialsperre ist als offenes Differential ausgebildet.

Das Radschlupfregelsystem ist somit ein elektronisches Steuerungssystem zur Beeinflussung des Fahrzustands eines Kraftfahrzeugs, bei dem ein von einer Antriebsmaschine bereitgestelltes verfügbares Antriebsmoment und übertragbare Antriebsmomente, die von mindestens zwei angetriebenen Rädern auf einen Untergrund bzw. eine Fahrbahn übertragen werden, beeinflusst werden.

Vorteilhafte Ausgestaltungen des Radschlupfregelsystems sind als vorteilhafte Ausgestaltungen des lösungsgemäßen Verfahrens anzusehen.

Ausführungsbeispiele der Erfindung werden nachfolgend anhand schematischer Zeichnungen näher erläutert. Es zeigen:
- Fig. 1: ein Fahrzeug mit einem erfindungsgemäßen Radschlupfregelsystem gemäß einer ersten Ausführung;
- Fig. 2: ein Diagramm, bei dem Radlasten von Rädern in Abhängigkeit einer Querbeschleunigung des Fahrzeugs dargestellt sind;
- Fig. 3: ein aufgebauter Bremsdruck des Bremssystems in Abhängigkeit einer zu Grunde gelegten Kenngröße;
- Fig. 4: ein Wirkungsgrad des Radschlupfregelsystems in Abhängigkeit der Temperatur des Bremssystems; und
- Fig. 5: ein Ablaufdiagramm eines weiteren Ausführungsbeispiels einer Funktionsweise des Radschlupfregelsystems.

In den Figuren werden gleiche oder funktionsgleiche Elemente mit den gleichen Bezugszeichen versehen.

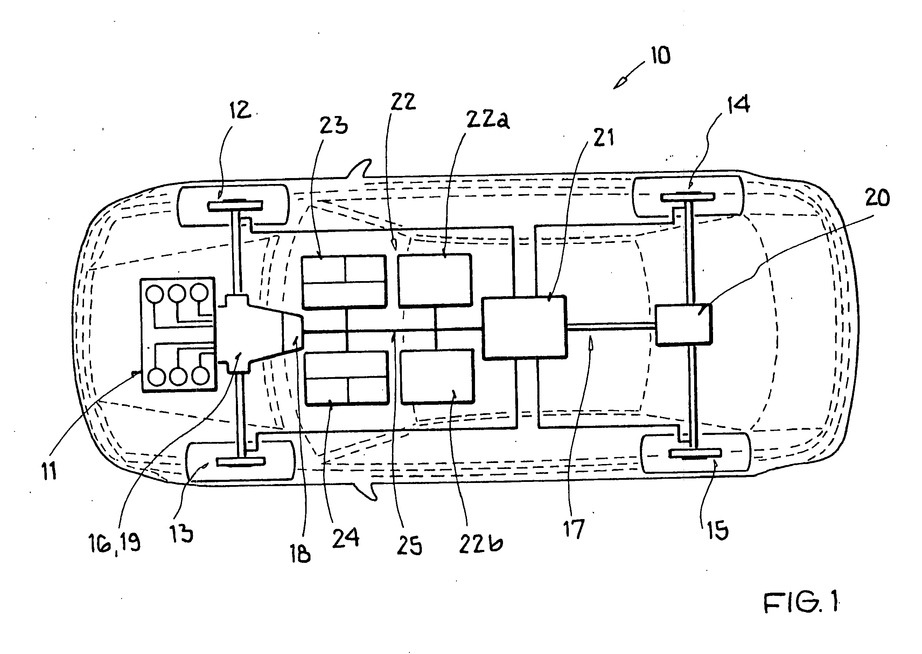

In Fig. 1 ist in schematischer Darstellung ein Fahrzeug 10 gezeigt, welches ein Antriebssystem aufweist, bei dem von einer Antriebsmaschine 11, insbesondere einem Verbrennungsmotor, ein Antriebsmoment erzeugt wird, welches als Motorantriebsmoment Mₘₒₜ bezeichnet wird. Das Fahrzeug 10 weist darüber hinaus Vorderräder 12 und 13 sowie Hinterräder 14 und 15 auf. Des Weiteren umfasst das Fahrzeug 10 ein Getriebe 16 durch welches das von der Antriebsmaschine 11 gelieferte Motorantriebsmoment Mₘₒₜ auf die beiden Vorderräder 12 und 13 verteilt wird. Im Ausführungsbeispiel ist das Fahrzeug 10 mit einem Frontantrieb ausgebildet, wobei auch vorgesehen sein kann, dass das Fahrzeug 10 als Allradfahrzeug oder lediglich mit einem Heckantrieb ausgebildet ist. Bei einer Ausgestaltung als Allradfahrzeug ist zusätzlich vorgesehen, dass das Getriebe 16 über einen Antriebsstrang 17 gekoppelt ist, wobei der Antriebsstrang 17 ein Längsdifferential 18 und einem vorderen in das Getriebegehäuse miteingebauten vorderen Querdifferential 19 ein hinteres Querdifferential 20 aufweist. Bei der Ausgestaltung als Allradfahrzeug wird das von der Antriebsmaschine 11 gelieferte Motorantriebsmoment Mₘₒₜ über das Getriebe 16 auf die beiden Vorderräder 12 und 13 sowie auf die beiden Hinterräder 14 und 15 verteilt.

Im Weiteren wird davon ausgegangen, dass das Fahrzeug 10 mit einem Frontantrieb ausgebildet ist und lediglich die Vorderräder 12 und 13 angetrieben werden. Um an diesen Vorderrädern 12 und 13 ein Bremsmoment aufbringen zu können, ist eine Bremsanlage bzw. ein Bremssystem 21 vorgesehen, welches einen selektiven Bremseingriff an jedem der Vorderräder 12 und 13 erlaubt, wobei das Bremsmoment an jedem dieser Vorderräder 12 und 13 individuell vorgebbar ist.

Darüber hinaus umfasst das Fahrzeug 10 ein Radschlupfregelsystem 22 umfassend eine elektronische Differentialsperre, wobei die elektronische Differentialsperre als offenes Differential ausgebildet ist. Das Radschlupfregelsystem 22 umfasst beispielhaft dargestellte Einheiten 22a und 22b, welche als Auswerteinheiten und/oder Steuerungs- und/oder Regelungseinheiten ausgebildet sind. Das Radschlupfregelsystem 22 kann auch einen oder mehrere Speichereinheiten aufweisen.

Darüber hinaus umfasst das Fahrzeug 10 ein ESP-System 23 sowie ein ABS-System 24. Zumindest das Radschlupfregelsystem 22 sowie das ESP-System 23 und das ABS-System 24 sind zur Kommunikation und zum Datenaustausch über einen Kommunikationsbus 25 des Fahrzeugs 10 verbunden.

Das Radschlupfregelsystem 22 umfasst Mittel zum Erfassen der Radlasten zumindest der Vorderräder 12 und 13. Das Radschlupfregelsystem 22 ist derart ausgebildet, dass dann, wenn unterschiedliche Radlasten der Vorderräder 12 und 13 erfasst werden, ein Ist-Wert einer vorgebbaren Kenngröße ermittelt wird, welcher mit einem Referenz-Wert dieser Kenngröße verglichen wird. Abhängig von dem Ergebnis dieses Vergleichs ist dann das Bremssystem 21 des Fahrzeugs 10 zur Erzeugung eines Bremsdrucks aktivierbar. Wird eine derartige Aktivierung des Bremssystems 21 auf Grund des Vergleichs der Kenngrößen-Werte vorgesehen, wird ein Bremsdruck zum Abbremsen eines der Vorderräder 12 und 13 abhängig von dem Ist-Wert der Kenngröße erzeugt. Das abzubremsende Rad wird dabei anhand einer charakteristischen Größe ermittelt. Der vom Bremssystem 21 zu erzeugende Bremsdruck wird vor dem Auftreten eines Radschlupfes der Vorderräder 12 oder 13 aufgebaut.

Bei einem ersten Ausführungsbeispiel kann dabei vorgesehen sein, dass die zu Grunde gelegte Kenngröße die Radlastdifferenz ist, welche zwischen den beiden unterschiedlichen Radlasten der Vorderräder 12 und 13 auftritt. Als Referenz-Wert dieser spezifizierten Kenngröße der Radlastdifferenz wird im Ausführungsbeispiel ein Wert vorgegeben, welcher eine Schlupfneigung mit einem Wert von 90 % charakterisiert. Dies bedeutet, dass der Referenz-Wert angibt, dass eine relativ hohe Schlupfneigung eines der Vorderräder 12 oder 13 vorliegt, dennoch kein Radschlupf dieses Rades aufgetreten ist.

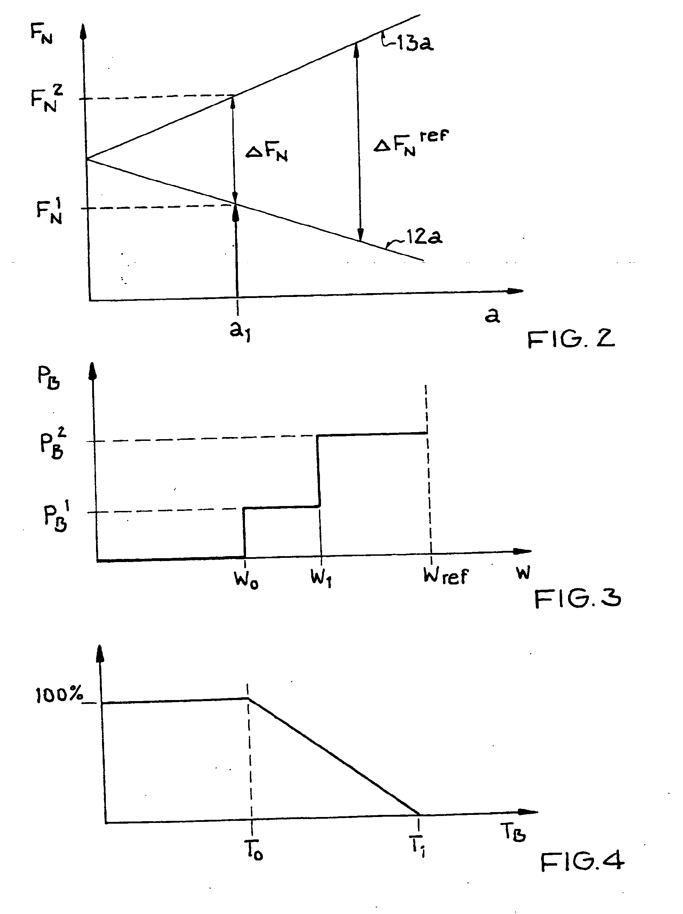

Anhand des in Fig. 2 dargestellten Diagramms wird dies näher erläutert. In diesem Diagramm sind die Radlasten F_{N} bzw. die auf die Vorderräder 12 und 13 wirkenden Gewichtskräfte in Normalenrichtung in Abhängigkeit einer Querbeschleunigung a des Fahrzeugs 10 bei einer Kurvenfahrt dargestellt. Aus dem Diagramm ist zu erkennen, dass auf Grund der Querdynamik bei einer Kurvenfahrt die Radlast F_{N} des kurvenäußeren Rades, welches bei einer Rechtskurvenfahrt durch das Vorderrad 13 gegeben ist, mit steigender Querbeschleunigung ansteigt. Ferner ist zu erkennen, dass das kurveninnere Rad, welches bei der gefahrenen Rechtskurve des Fahrzeugs 10 durch das Vorderrad 12 charakterisiert ist, mit steigender Querbeschleunigung des Fahrzeugs eine abnehmende Radlast F_{N} aufweist. Die Verläufe sind durch die Kennlinien 12a und 13a skizzenhaft dargestellt.

Im erläuterten Ausführungsbeispiel, bei dem die Kenngröße durch die Radlastdifferenz gegeben ist, wird im Ausführungsbeispiel ein Referenz-Radlastdifferenzwert ΔF_{N}^{ref} vorgegeben. Dieser charakterisiert eine Situation, in der bei einer Kurvenfahrt ein relativ großer Unterschied der Radlasten F_{N} zwischen dem kurvenäußeren Vorderrad 13 und dem kurveninneren Vorderrad 12 auftritt, aber noch kein Radschlupf dieser beiden Vorderräder 12 und 13 vorliegt.

In Fig. 2 ist lediglich die Abhängigkeit der Radlasten F_{N} in Abhängigkeit der Querbeschleunigung des Fahrzeugs 10 dargestellt. Es kann jedoch auch vorgesehen sein, dass die Abhängigkeit von der Querbeschleunigung und der Längsbeschleunigung des Fahrzeugs 10 dargestellt wird, was in der Praxis den üblichen Fall darstellt. Zur Vereinfachung ist jedoch in Fig. 2 lediglich die Abhängigkeit der Querbeschleunigung gezeigt.

Wird nun bei der Kurvenfahrt des Fahrzeugs 10 durch eine entsprechende Sensorik, insbesondere durch das ESP-System 23, ein Erfassen der Radlasten F_{N} der Vorderräder 12 und 13 durchgeführt und beim Vergleich dieser Radlasten F_{N} ein Unterschied festgestellt, so wird dies dem Radschlupfregelsystem 22 mitgeteilt und der Ist-Wert der momentanen Radlastdifferenz zwischen den Vorderrädern 12 und 13 ermittelt, wobei dieser momentane Ist-Radlastdifferenzwert ΔF_{N} dann mit dem Referenz-Radlastdifferenzwert ΔF_{N}^{ref} verglichen wird.

In Fig. 2 sind die momentanen Radlasten F_{N} der Vorderräder 12 und 13 schematisch dargestellt, wobei in dem momentanen Fahrzeugzustand eine Querbeschleunigung a₁ detektiert wurde. Auf Grund dieser Größe ist auf das kurveninnere Vorderrad 12 eine Radlast von F_{N}¹ einwirkend. Auf das kurvenäußere Vorderrad 13 wirkt eine Radlast F_{N}² ein. Bei dem zu Grunde gelegten offenen Differential ist auf Grund der Abhängigkeit eines übertragbaren Antriebsmoments von der übertragbaren Antriebskraft, welche wiederum proportional zu diesen Radlasten F_{N} und auch proportional zu einem Fahrbahnreibwert p ist, auf beide angetriebenen Vorderräder 12 und 13 lediglich jeweils ein der Radlast F_{N}¹ proportionales übertragbares Antriebsmoment übertragbar. In der gezeigten Ausführung bedeutet dies, dass bei dem offenen Differential auf beide Vorderräder 12 und 13 jeweils nur ein übertragbares Antriebsmoment übertragbar ist, welches proportional zur Radlast F_{N}¹ des kurveninneren Vorderrades 12 ist.

Um jedoch auf das kurvenäußere Vorderrad 13 das theoretisch mögliche übertragbare Antriebsmoment zu übertragen, welches proportional zur Radlast F_{N}² wäre, ist durch das Radschlupfregelsystem 22 ein entsprechender Eingriff durchzuführen und die elektronische Differentialsperre des Fahrzeugs 10 entsprechend zu betätigen.

Dazu wird bei dem vorgeschlagenen Radschlupfregelsystem 22 zunächst ein Vergleich der Referenz-Radlastdifferenz ΔF_{N}^{ref} mit der Ist-Radlastdifferenz ΔF_{N} dahingehend durchgeführt, ob die Ist-Radlastdifferenz ΔF_{N} eine bestimmte vorgebbare prozentuale Größe der Referenz-Radlastdifferenz ΔF_{N}^{ref} aufweist. Im Ausführungsbeispiel ist es dazu erforderlich, dass die Ist-Radlastdifferenz ΔF_{N} zumindest 95 % der Referenz-Radlastdifferenz ΔF_{N}^{ref} aufweist. Ist dies der Fall und ist die Ist-Radlastdifferenz ΔF_{N} auch kleiner als die Referenz-Radlastdifferenz ΔF_{N}^{ref}, so wird ein Fahrzeugzustand erkannt, bei dem einerseits kein Radschlupf der angetriebenen Vorderräder 12 und 13 vorliegt und andererseits dennoch eine Aktivierung der elektronischen Differentialsperre zunächst gegeben ist.

Ausgehend von dieser Situation wird im Ausführungsbeispiel dann noch überprüft, ob die Fahrzeuggeschwindigkeit größer als eine Schwellwert-Geschwindigkeit des Fahrzeugs 10 ist, welche im Ausführungsbeispiel mit 10 km/h vorgegeben ist. Ist auch dieses Erfordernis gegeben, so wird die elektronische Differentialsperre zum Aufbau eines Sperrmoments bzw. das Bremssystem 21 zum Aufbau eines Bremsdruck P_{B} aktiviert. Das Bremssystem 21 erzeugt dabei einen Bremsdruck P_{B}, welcher abhängig von der momentan erfassten Ist-Radlastdifferenz ΔF_{N} ist. Der Bremsdruck P_{B} wird dabei an dem abzubremsenden Rad in Abhängigkeit dieser Ist-Radlastdifferenz ΔF_{N} erzeugt. Das abzubremsende Rad wird dabei anhand einer charakteristischen Größe ermittelt, wobei im Ausführungsbeispiel die charakteristische Größe durch die Radlast F_{N} gegeben ist. Im Ausführungsbeispiel wird das abzubremsende Rad dadurch ermittelt, dass ein Bremsdruck P_{B} an dem Vorderrad aufzubauen ist, welches die kleinere Radlast F_{N} aufweist. Bei dem gewählten Beispiel weist das kurveninnere Vorderrad 12 eine kleinere Radlast F_{N}¹ auf, wobei der Bremsdruck P_{B} an diesem Vorderrad 12 erzeugt wird. Der Bremsdruck P_{B} wird dabei in Abhängigkeit der Motordrehzahl nₘₒₜ, des Motorantriebsmoments Mₘₒₜ und der Radlastdifferenz ΔF_{N} erzeugt.

Es kann dabei vorgesehen sein, dass in dem Radschlupfregelsystem 22 ein Diagramm gemäß Fig. 3 abgelegt ist und anhand dieses Diagramms ein entsprechender Druckaufbau erfolgt. In dem beispielhaft dargestellten Diagramm ist zu erkennen, dass dann, wenn ein Ist-Wert kleiner als ein Wert W₀, welcher im Ausführungsbeispiel 95 % des Referenz-Wertes W_{ref} aufweist, kein Aufbau eines Bremsdrucks P_{B} erfolgt. W₀ charakterisiert somit einen unteren Referenz-Wert und W_{ref} einen oberen Referenz-Wert.

Ist der momentane Ist-Wert jedoch größer als der Wert W₀ und liegt er in dem Intervall zwischen W₀ und W₁ so erfolgt ein Aufbau eines Bremsdrucks P_{B}¹. Ist der momentane Ist-Wert größer als der Wert W₁ und kleiner als der Referenz-Wert W_{ref}, so wird ein Bremsdruck P_{B}² durch das Bremssystem 21 erzeugt.

Die Werte W₀, W₁ und W_{ref} charakterisieren gemäß der ersten Ausführung der Erfindung Ist-Radlastdifferenzwerte und Referenz-Radlastdifferenzwerte.

Erfolgt somit bei dem Radschlupfregelsystem 22 eine Situation, in der eine Aktivierung der elektronischen Differentialsperre und somit auch eine Aktivierung des Bremssystems 21 zum Aufbau eines Bremsdrucks P_{B} gegeben ist, wird der Bremsdruck P_{B} so erzeugt, bis die Summe aus den momentan auf die Vorderräder 12 und 13 übertragbaren Antriebsmomente gleich der Summe der momentan theoretisch möglichen Antriebsmomente ist. In der Darstellung gemäß Fig. 2 bedeutet dies, dass unter der Voraussetzung, dass ein Bremsdruckaufbau erfolgt, dieser derart und solange erfolgt, dass ausgehend von der Situation, bei denen auf beide Vorderräder 12 und 13 lediglich jeweils übertragbare Antriebsmomente proportional zu der Radlast F_{N}¹ erzeugbar sind, nunmehr dann auf das kurveninnere Vorderrad 12 ein übertragbares Antriebsmoment übertragen wird, welches proportional zur Radlast F_{N}¹ ist und auf das kurvenäußere Vorderrad 13 ein übertragbares Antriebsmoment übertragbar ist, welches proportional zur Radlast F_{N}² ist.

Darüber hinaus erfolgt im Ausführungsbeispiel die Aktivierung des Radschlupfregelungssystem 22 und insbesondere die Aktivierung der elektronischen Differentialsperre derart, dass der Wirkungsgrad dieses Systems abhängig von einer erfassten Temperatur T_{B} des Bremssystems 21 ist. In Fig. 4 ist dabei eine schematische beispielhafte Kennlinie gezeigt. Bei sehr kleinen Temperaturen, welche bis hin zu einer Schwellwerttemperatur T₀ reichen, wird das System mit einem maximalen Wirkungsgrad von 100 % betrieben und voll aktiviert. Weist das Bremssystem 21 eine höhere Temperatur auf, welche zwischen der Schwellwerttemperatur T₀ und der Grenztemperatur T₁ ist, so wird der Wirkungsgrad des Systems verkleinert, insbesondere linear verkleinert. Diese Kennlinie ist lediglich beispielhaft und kann in vielfältiger Weise ausgebildet sein.

Bei einem weiteren Ausführungsbeispiel kann vorgesehen sein, dass die Kenngröße nicht durch die Radlastdifferenz charakterisiert ist, sondern durch eine Antriebsmomentendifferenz spezifiziert ist. Die Antriebsmomentendifferenz ist dabei aus einem verfügbaren Antriebsmoment und einem auf ein Rad übertragbares Antriebsmoment gebildet. Das verfügbare Antriebsmoment ist abhängig von einem Motormoment und einer Übersetzung, welche eine Getriebeübersetzung und eine Achsenübersetzung berücksichtigt. Das übertragbare Antriebsmoment ist abhängig von der Radlast F_{N} des Rades und dem Reifenhalbmesser sowie einem Fahrbahnreibwert p.

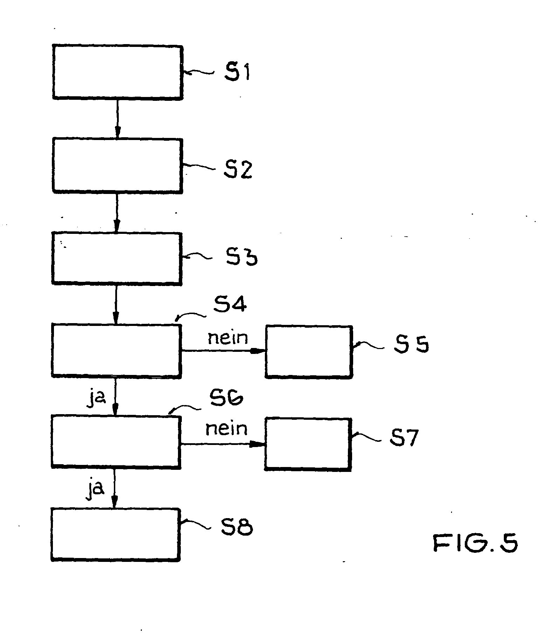

In Fig. 5 ist ein Ablaufdiagramm einer Funktionsweise eines Radschlupfregelsystems 22 gemäß der zweiten Ausführung dargestellt. In einem ersten Schritt S1 werden die Radlasten F_{N}¹ und F_{N}² der Vorderräder 12 und 13 bestimmt. Dies erfolgt in dem ESP-System 23. In einem Schritt S2 wird die Unterschiedlichkeit der Radlasten F_{N}¹ und F_{N}² erfasst und bei einem erkannten Unterschied gemäß einem Schritt S3 als Kenngröße eine Antriebsmomentendifferenz ermittelt. Dabei wird ein verfügbares Antriebsmoment aus dem Motormoment und der Übersetzung bestimmt und übertragbare Antriebsmomente auf die Vorderräder 12 und 13 auf Grundlage der oben genannten Parameter ermittelt. Analog zur Ausführung gemäß dem ersten Ausführungsbeispiel wird dann ein Referenz-Antriebsmomentendifferenzwert mit einem Ist-Antriebsmomentendifferenzwert verglichen. Der Referenz-Antriebsmomentendifferenzwert gibt dabei wiederum eine Situation an, in der ein Radschlupf gerade nicht auftritt bzw. eine gewissen Wahrscheinlichkeit eines Radschlupfes charakterisiert ist. Diese ist überlicherweise dann relativ groß, wenn dieser Referenz-Antriebsmomentendifferenzwert relativ groß ist. Ist der Ist-Antriebsmomentendifferenzwert kleiner als der Referenz-Antriebsmomentendifferenzwert, aber im Ausführungsbeispiel größer als 97 % des Referenz-Antriebsmomentendifferenzwertes, so wird ein Fahrzustand des Fahrzeugs 10 erkannt, bei dem eine Aktivierung der elektronischen Differentialsperre bzw. des Bremssystems 21 gegeben ist. Ist bei diesem Vergleich gemäß Schritt S4 der Ist-Antriebsmomentendifferenzwert nicht in dem vorgenannten Intervall enthalten, wird gemäß dem Schritt S5 erkannt, dass kein Bremsdruck P_{B} aufgebaut werden soll.

Ist im Schritt S4 jedoch ermittelt worden, dass dieser Ist-Antriebsmomentendifferenzwert derart ist, dass eine Aktivierung der elektronischen Differentialsperre bzw. des Bremssystems 21 gegeben ist, so wird in einem Schritt S6 ermittelt, ob die Fahrzeuggeschwindigkeit des Fahrzeugs 10 größer einem Schwellwert der Fahrzeuggeschwindigkeit ist. Ist es bei der zu Grunde gelegten Kurvenfahrt des Fahrzeugs 10 nicht der Fall, so wird gemäß einem Schritt S7 kein Bremsdruck P_{B} aufgebaut. Ist die Fahrzeuggeschwindigkeit jedoch größer als der Schwellwert der Fahrzeuggeschwindigkeit, so wird dann noch die Temperatur T_{B} des Bremssystems 21 bestimmt und abhängig davon entschieden, mit welchem Wirkungsgrad das Radschlupfregelsystem 22 im Hinblick auf die Bremsdruckerzeugung betrieben wird (Schritt S8).

Die Reihenfolge der Schritte in Fig. 5 ist nicht zwingend. Es kann beispielsweise die Überprüfung der Fahrzeuggeschwindigkeit auch bevorzugt am Anfang durchgeführt werden.

Es kann auch vorgesehen, dass ein Lenkwinkel als Entscheidungsgröße für die Aktivierung der elektronischen Differentialsperre und des Bremssystems 21 zum Aufbau eines Bremsdrucks P_{B} herangezogen wird.

Das vorgeschlagene Radschlupfregelsystem 22 ermöglicht ein Sperren des zu Grunde gelegten offenen Differentials schon vor dem Auftreten eins Schlupfes am Rad abhängig von der Fahrsituation. Dadurch kann ein kurzes Durchdrehen der angetriebenen Vorderräder 12 und 13 vor einem Eingriff der normalen herkömmlichen elektronischen Differentialsperrfunktion im Schubbetrieb des Fahrzeugs unter hohen Querbeschleunigungen in Kurven verhindert werden.

Es kann hierbei des Weiteren zwischen zwei grundlegenden Fällen unterschieden werden. Einerseits kann dabei eine Anfahrsituation des Fahrzeugs 10 mit Fahrzeuggeschwindigkeiten bis etwa 10 km/h betrachtet werden. Als weiteren Fall kann eine Fahrsituation des Fahrzeugs 10 betrachtet werden, welche das Beschleunigen des Fahrzeugs 10 bei einer Kurvenfahrt bei Geschwindigkeiten größer als 10 km/h charakterisieren.

Beim Anfahren des Fahrzeugs 10 kann wiederum dahingehend unterschieden werden, ob das Fahrzeug gerade anfährt und somit keinen Lenkwinkel der angetriebenen Vorderräder 12 und 13 aufweist oder jedoch ein Lenkwinkel vorliegt. Bein Anfahren ohne einen Lenkwinkel sind die Radlasten F_{N} und unter der Voraussetzung eines homogenen Fahrbahnreibwertes µ im Wesentlichen gleich und somit auch die übertragbaren Antriebsmomente auf beide Vorderräder 12 und 13 im Wesentlichen gleich. Eine Aktivierung der elektronischen Differentialsperre ist in diesem Fall nicht sinnvoll und das Radschlupfregelsystem 22 führt keinen Bremsdruckaufbau als Vorsteuerfunktion durch.

Beim Anfahren mit einem großen Lenkwinkel sind zwar die Radlasten F_{N} der Vorderräder 12 und 13 ebenfalls im Wesentlichen gleich, jedoch besteht hierbei bedingt durch die Achsgeometrie und/oder eine auf das Anfahren unmittelbar darauf folgende Radentlastung eine Tendenz zu einem sogenannten Radabreisser des kurveninneren Rades 12. Um dieses Verhalten zu verbessern, kann beim Anfahren des Fahrzeugs 10 abhängig vom Lenkwinkel vor dem Überschreiten des übertragbaren Antriebsmoments an die Vorderräder 12 und 13 das kurveninnere Vorderrad 12 durch Aufbau eines Bremsdrucks leicht angebremst werden, um einen Radschlupf dieses Vorderrades 12 zu verzögern. Abhängig von Lenkwinkeln kann dabei der Vorsteuereingriff erfolgen.

Betrachtet man die zu den Fig. 1 bis 5 bereits erläuterte Fahrsituation eines Beschleunigens des Fahrzeugs 10 bei einer Kurvenfahrt, so ist bei einer derartigen Fahrsituation das am kurveninnere Vorderrad 12 übertragbare Antriebsmoment relativ klein und das Gasgeben des Fahrzeugführers hätte im Nachfolgenden ein durchdrehendes bzw. ein schlupfendes Vorderrad 12 zur Folge. In dieser Situation wird das Radschlupfregelsystem 22 präventiv eingegriffen und die elektronische Differentialsperre zum Bremsdruckaufbau aktiviert. Es kann vorgesehen sein, dass in fahrdynamisch kritischen Fahrzuständen des Fahrzeugs 10 eine Aktivierung der elektronischen Differentialsperre nicht freigegeben wird, um beispielsweise Beeinträchtigungen der Funktionalität des ESP-Systems 23 verhindern zu können.

## Patentansprüche

1. Radschlupfregelsystem für ein Fahrzeug (10) mit zumindest zwei angetriebenen Rädern (11 bis 15), welches Mittel zum Erfassen der Radlasten der Räder (11 bis 15) aufweist und Mittel zum Ermitteln eines Ist-Werts einer Kenngröße bei unterschiedlichen Radlasten der beiden Räder (11 bis 15) und Mittel zum Vergleichen des Ist-Werts der Kenngröße mit einem Referenz-Wert der Kenngröße umfasst, wobei abhängig von dem Ergebnis des Vergleichs ein Bremssystem (21) des Fahrzeugs (10) zur Erzeugung eines Bremsdrucks aktivierbar ist, wobei das Bremssystem (21) bei dessen Aktivierung einen Bremsdruck zum Abbremsen eines Rades, das anhand einer charakteristischen Größe ermittelbar ist, abhängig von dem Ist-Wert der Kenngröße erzeugen kann und wobei das Bremssystem (21) zum Aufbauen des Bremsdrucks vor dem Auftreten eines Radschlupfs eines der Räder (11 bis 15) ausgebildet ist.

2. Radschlupfregelsystem nach Anspruch 1,
**dadurch gekennzeichnet, dass**
der Referenz-Wert der Kenngröße eine Situation charakterisiert, in der ein Radschlupf an einem der Räder (11 bis 15) auftritt.

3. Radschlupfregelsystem nach Anspruch 1 oder 2,
**dadurch gekennzeichnet, dass**
dann, wenn der Ist-Wert der Kenngröße kleiner als der Referenz-Wert der Kenngröße ist, das Bremssystem (21) zum Aufbau von Bremsdruck vor dem Auftreten von Radschlupf aktivierbar ist.

4. Radschlupfregelsystem nach Anspruch 3,
**dadurch gekennzeichnet, dass**
das Bremssystem (21) zum Aufbau von Bremsdruck vor dem Auftreten von Radschlupf nur dann aktivierbar ist, wenn der Ist-Wert zumindest 95 % des Referenz-Wertes, insbesondere 97 % des Referenz-Wertes, insbesondere 99 % des Referenz-Wertes, beträgt.

5. Radschlupfregelsystem nach einem der vorhergehenden Ansprüche,
**dadurch gekennzeichnet, dass**
das Bremssystem (21) zur Erzeugung eines Bremsdrucks in Abhängigkeit der momentanen Fahrzeuggeschwindigkeit aktivierbar ist.

6. Radschlupfregelsystem nach einem der vorhergehenden Ansprüche,
**dadurch gekennzeichnet, dass**
die Aktivierung des Bremssystems (21) und bei einem gegebenenfalls aktivierten Bremssystem (21) der Aufbau des Bremsdrucks abhängig von der Temperatur des Bremssystems (21) durchgeführt wird.

7. Radschlupfregelsystem nach einem der vorhergehenden Ansprüche,
**dadurch gekennzeichnet, dass**
die Aktivierung des Bremssystems (21) und bei einem gegebenenfalls aktivierten Bremssystem (21) der Aufbau des Bremsdrucks abhängig von einem Lenkwinkel zumindest eines Rades (11 bis 15) durchgeführt wird.

8. Radschlupfregelsystem nach einem der vorhergehenden Ansprüche,
**dadurch gekennzeichnet, dass**
die Kenngröße die Radlastdifferenz zwischen den beiden unterschiedlichen Radlasten der Räder (11 bis 15) ist.

9. Radschlupfregelsystem nach Anspruch 8,
**dadurch gekennzeichnet, dass**
der Aufbau des Bremsdrucks bei einem aktivierten Bremssystem (21) zusätzlich abhängig von einer Motordrehzahl und einem momentanen Motormoment ist.

10. Radschlupfregelsystem nach Anspruch 8 oder 9,
**dadurch gekennzeichnet, dass**
für ein vorgebbares Intervall von Ist-Werten von Radlastdifferenzen ein konstanter Bremsdruck erzeugbar ist.

11. Radschlupfregelsystem nach einem der Ansprüche 1 bis 7,
**dadurch gekennzeichnet, dass**
die Kenngröße eine Antriebsmomentdifferenz ist, welche aus einem verfügbaren Antriebsmoment und einem auf ein Rad (11 bis 15) übertragbares Antriebsmoment bestimmbar ist.

12. Radschlupfregelsystem nach Anspruch 11,
**dadurch gekennzeichnet, dass**
das verfügbare Antriebsmoment abhängig von dem Motormoment und einer Übersetzung, insbesondere einer Getriebeübersetzung und einer Achsenübersetzung, ist.

13. Radschlupfregelsystem nach Anspruch 11 oder 12,
**dadurch gekennzeichnet, dass**
das übertragbare Antriebsmoment abhängig von der Radlast des Rades (11 bis 15) und/oder dem Reifenhalbmesser und/oder von einem Fahrbahnreibwert ist.

14. Radschlupfregelsystem nach einem der Ansprüche 11 bis 13,
**dadurch gekennzeichnet, dass**
zum Bestimmen des übertragbaren Antriebsmoments Informationen eines Fahrdynamikregelsystems, insbesondere eines ESP-Systems (23), berücksichtigt werden.

15. Radschlupfregelsystem nach einem der Ansprüche 11 bis 14,
**dadurch gekennzeichnet, dass**
der Bremsdruck bei einem aktivierten Bremssystem (21) derart aufgebaut wird, bis die Summe aus den momentan auf die beiden Räder (11 bis 15) übertragbaren Antriebsmomente gleich der Summe der jeweils momentan theoretisch möglichen Antriebsmomente ist.

16. Radschlupfregelsystem nach einem der vorhergehenden Ansprüche,
**dadurch gekennzeichnet, dass**
die das abzubremsende Rad (11 bis 15) charakterisierende Größe die Radlast eines Rades (11 bis 15) ist und das Rad (11 bis 15) mit der kleineren Radlast abzubremsen ist, oder
die das abzubremsende Rad (11 bis 15) charakterisierende Größe durch ein auf das jeweilige Rad (11 bis 15) übertragbare Antriebsmoment gegeben ist und das Rad (11 bis 15) mit dem kleineren übertragbaren Antriebsmoment abzubremsen ist.

17. Verfahren zum Regeln eines Radschlupfes von Rädern (11 bis 15) eines Fahrzeugs (10) mit zumindest zwei angetriebenen Rädern (11 bis 15), bei dem Radlasten der Räder (11 bis 15) erfasst werden und bei unterschiedlichen Radlasten der beiden Räder (11 bis 15) ein Ist-Wert einer Kenngröße ermittelt wird, welcher mit einem Referenz-Wert der Kenngröße verglichen wird und abhängig von dem Ergebnis des Vergleichs ein Bremssystem (21) des Fahrzeugs (10) zur Erzeugung eines Bremsdrucks aktiviert wird, wobei bei einem Aktivieren des Bremssystems (21) ein Bremsdruck zum Abbremsen eines Rades (11 bis 15) abhängig von dem Ist-Wert der Kenngröße erzeugt wird, wobei das abzubremsende Rad (11 bis 15) anhand einer charakteristischen Größe ermittelt wird und der Bremsdruck vor dem Auftreten eines Radschlupfs eines der Räder (11 bis 15) aufgebaut wird.

## Claims

1. Wheel slip control system for a vehicle (10) having at least two driven wheels (11 to 15), which comprises means for detecting the wheel loads of the wheels (11 to 15) and means for determining an actual value of a parameter in the event that the two wheels (11 to 15) have different wheel loads and means for comparing the actual value of the parameter with a reference value of the parameter, wherein on the basis of the result of the comparison a brake system (21) of the vehicle (10) can be activated to produce a brake pressure, wherein the brake system (21) can, when activated, produce on the basis of the actual value of the parameter a brake pressure for braking a wheel which can be determined on the basis of a characteristic variable, and wherein the brake system (21) is designed to build up the brake pressure before wheel slip of one of the wheels (11 to 15) occurs.

2. Wheel slip control system according to claim 1, **characterised in that** the reference value of the parameter characterises a situation in which wheel slip occurs at one of the wheels (11 to 15).

3. Wheel slip control system according to either claim 1 or claim 2, **characterised in that**, when the actual value of the parameter is lower than the reference value of the parameter, the brake system (21) can be activated to build up brake pressure before wheel slip occurs.

4. Wheel slip control system according to claim 3, **characterised in that** the brake system (21) can be activated to build up brake pressure before wheel slip occurs only when the actual value is at least 95 % of the reference value, in particular 97 % of the reference value, in particular 99 % of the reference value.

5. Wheel slip control system according to any of the preceding claims, **characterised in that** the brake system (21) can be activated to produce a brake pressure on the basis of the instantaneous vehicle speed.

6. Wheel slip control system according to any of the preceding claims, **characterised in that** the activation of the brake system (21) and, in the case of an optionally activated brake system (21), the building up of the brake pressure is carried out on the basis of the temperature of the brake system (21).

7. Wheel slip control system according to any of the preceding claims, **characterised in that** the activation of the brake system (21) and, in the case of an optionally activated brake system (21), the building up of the brake pressure is carried out on the basis of a steering angle of at least one wheel (11 to 15).

8. Wheel slip control system according to any of the preceding claims, **characterised in that** the parameter is the wheel load difference between the two different wheel loads of the wheels (11 to 15).

9. Wheel slip control system according to claim 8, **characterised in that** the building up of the brake pressure in the case of an activated brake system (21) is also dependent on an engine speed and an instantaneous engine torque.

10. Wheel slip control system according to either claim 8 or claim 9, **characterised in that** a constant brake pressure can be produced for a predefinable range of actual values of wheel load differences.

11. Wheel slip control system according to any of claims 1 to 7, **characterised in that** the parameter is a drive torque difference which can be determined from an available drive torque and a drive torque which can be transferred to a wheel (11 to 15).

12. Wheel slip control system according to claim 11, **characterised in that** the available drive torque is dependent on the engine torque and a ratio, in particular a gear ratio and an axle ratio.

13. Wheel slip control system according to either claim 11 or claim 12, **characterised in that** the transferable drive torque is dependent on the wheel load of the wheel (11 to 15) and/or the tyre radius and/or on a road friction value.

14. Wheel slip control system according to any of claims 11 to 13, **characterised in that**, to determine the transferable drive torque, information from a vehicle dynamics control system, in particular an ESP system (23), is taken into account.

15. Wheel slip control system according to any of claims 11 to 14, **characterised in that**, in the case of an activated brake system (21), the brake pressure is built up until the sum of the drive torques which can instantaneously be transferred to the two wheels (11 to 15) is equal to the sum of the instantaneously theoretically possible drive torques.

16. Wheel slip control system according to any of the preceding claims, **characterised in that** the variable characterising the wheel (11 to 15) to be braked is the wheel load of a wheel (11 to 15) and the wheel (11 to 15) having the smaller wheel load is to be braked, or the variable characterising the wheel (11 to 15) to be braked is given by a drive torque which can be transferred to the respective wheel (11 to 15) and the wheel (11 to 15) having the smaller transferable drive torque is to be braked.

17. Method for controlling wheel slip of wheels (11 to 15) of a vehicle (10) having at least two driven wheels (11 to 15), in which wheel loads of the wheels (11 to 15) are detected and, in the event that the two wheels (11 to 15) have different wheel loads, an actual value of a parameter is determined and is compared with a reference value of the parameter and, on the basis of the result of the comparison, a brake system (21) of the vehicle (10) is activated to produce a brake pressure, wherein, when the brake system (21) is activated, a brake pressure for braking a wheel (11 to 15) is produced on the basis of the actual value of the parameter, the wheel (11 to 15) to be braked being determined on the basis of a characteristic variable and the brake pressure being built up before wheel slip of one of the wheels (11 to 15) occurs.

## Revendications

1. Système de réglage de patinage de roues pour un véhicule automobile (10) ayant au moins deux roues entraînées (11 à 15), ledit véhicule présentant des moyens pour recueillir la charge des roues (11 à 15) et comprenant des moyens pour déterminer une valeur réelle d'une caractéristique dans le cas de charges différentes des deux roues (11 à 15) et des moyens pour comparer la valeur réelle de la caractéristique à une valeur de référence de la caractéristique, dans lequel, en fonction du résultat de la comparaison, un système de frein (21) du véhicule automobile (10) peut être activé pour produire une pression de freinage, dans lequel le système de frein (21) peut produire, lors de son activation, une pression de frein pour freiner une roue, qui peut être obtenue sur la base d'une grandeur caractéristique, en fonction de la valeur réelle de la caractéristique et dans lequel le système de frein (21) est conformé pour élaborer la pression de freinage avant que n'apparaisse un patinage sur l'une des roues (11 à 15).

2. Système de réglage de patinage des roues selon la revendication 1,
**caractérisé en ce que**
la valeur de référence de la caractéristique caractérise une situation dans laquelle un patinage apparaît sur l'une des roues (11 à 15).

3. Système de réglage de patinage des roues selon la revendication 1 ou la revendication 2,
**caractérisé en ce que**,
lorsque la valeur réelle de la caractéristique est plus petite que la valeur de référence de la caractéristique, le système de frein (21) peut être activé pour instaurer la pression de freinage avant l'apparition d'un patinage sur la roue.

4. Système de réglage de patinage des roues selon la revendication 3,
**caractérisé en ce que**
le système de frein (21) pour l'élaboration de la pression de freinage avant l'apparition du patinage de la roue ne peut être activé que si la valeur réelle atteint au moins 95 % de la valeur de référence, en particulier 97 % de la valeur de référence, tout particulièrement 99 % de la valeur de référence.

5. Système de réglage de patinage de roues selon l'une quelconque des revendications précédentes,
**caractérisé en ce que**
le système de frein (21) peut être activé pour la production d'une pression de freinage en fonction de la vitesse momentanée du véhicule automobile.

6. Système de réglage de patinage de roues selon l'une quelconque des revendications précédentes,
**caractérisé en ce que**
l'activation du système de frein (21) et, dans le cas d'un système de frein (21) éventuellement activé, de l'élaboration de la pression de freinage est réalisée en fonction de la température du système de frein (21).

7. Système de réglage de patinage de roues selon
l'une quelconque des revendications précédentes, **caractérisé en ce que**
l'activation du système de frein (21) et, dans le cas d'un système de frein (21) éventuellement activé, de l'élaboration de la pression de freinage est réalisée en fonction d'un angle de direction d'au moins une roue (11 à 15).

8. Système de réglage de patinage de roues selon l'une quelconque des revendications précédentes,
**caractérisé en ce que**
la caractéristique est la différence de charge entre les deux charges différentes des roues (11 à 15).

9. Système de réglage de patinage de roues selon la revendication 8
**caractérisé en ce que**
l'élaboration de la pression de freinage lors d'un système de frein activé (21) et est en outre dépendant d'une vitesse de rotation du moteur et d'un couple moteur momentané.

10. Système de réglage de patinage de roues selon la revendication 8 ou la revendication 9,
**caractérisé en ce que**,
sur un intervalle prédéterminable de valeurs réelles de différences de charge des roues, une pression de freinage constante peut être produite.

11. Système de réglage de patinage de roues selon l'une quelconque des revendications 1 à 7,
**caractérisé en ce que**
la caractéristique est une différence de couple d'entraînement qui peut être déterminée à partir d'un couple d'entraînement disponible et d'un couple d'entraînement transférable sur une roue (11 à 15).

12. Système de réglage de patinage de roues selon la revendication 11,
**caractérisé en ce que**
le couple d'entraînement disponible dépend du couple moteur et d'un engrenage, en particulier d'un engrenage de transmission et d'un engrenage axial.

13. Système de réglage de patinage de roues selon la revendication 11 ou la revendication 12,
**caractérisé en ce que**
le couple d'entraînement transférable dépend de la charge de la roue (11 à 15) et/ou du demi-diamètre des pneus et/ou d'un coefficient de frottement de la roue.

14. Système de réglage de patinage de roues selon l'une quelconque des revendications 11 à 13,
**caractérisé en ce que**,
pour déterminer le couple d'entraînement transférable, on tient compte d'informations d'un système de réglage de dynamique de fonctionnement, en particulier d'un système ESP (23).

15. Système de réglage de patinage de roues selon l'une quelconque des revendications 11 à 14,
**caractérisé en ce que**
la pression de freinage, dans le cas d'un système de frein activé (21), est instaurée jusqu'à ce que la somme des couples d'entraînement momentanément transférables sur les deux roues (11 à 15) soit égale à la somme des couples d'entraînement momentanément théoriquement possibles, respectivement.

16. Système de réglage de patinage de roues selon l'une quelconque des revendications précédentes,
**caractérisé en ce que**
la grandeur caractérisant la roue à freiner (11 à 15) est la charge d'une roue (11 à 15) et la roue (11 à 15) doit être freinée avec la charge de roue plus petite, ou
la grandeur caractérisant la roue à freiner (11 à 15) est transférée par un couple d'entraînement transférable à la roue respective (11 à 15) et la roue (11 à 15) doit être freinée avec le couple d'entraînement transférable plus petit.

17. Procédé de régulation d'un patinage de roues (11 à 15) d'un véhicule automobile (10) avec au moins deux roues entraînées (11 à 15), dans lequel des charges des roues (11 à 15) sont recueillies et, dans le cas de différentes charges des deux roues (11 à 15), on détermine une valeur réelle d'une caractéristique, qui est comparée à une valeur de référence de la caractéristique et, en fonction du résultat de la comparaison, un système de frein (21) du véhicule automobile (10) est activé pour produire une pression de freinage, tandis que, lors d'une activation du système de frein (21), une pression de freinage pour freiner une roue (11 à 15) est produite en fonction de la valeur réelle de la caractéristique, dans lequel la roue à freiner (11 à 15) est déterminée à la lumière d'une grandeur caractéristique et la pression de freinage est élaborée avant l'apparition d'un patinage de l'une des roues (11 à 15).
